# EUROPEAN PATENT SPECIFICATION

(11) **EP 2 500 219 B1**
(45) Date of publication and mention of the grant of the patent: **20.11.2019**
(21) Application number: 12159630.8
(22) Date of filing: 15.03.2012
(51) Int. Cl.: B60S 3/04, B60S 3/06

(54) **Method and apparatus for washing or drying a vehicle**
Verfahren und Vorrichtung zum Waschen oder Trocknen eines Fahrzeugs
Procédé et appareil pour laver ou sécher un véhicule

(30) Priority: 16.03.2011 FI 20115259
(43) Date of publication of application: 19.09.2012
(73) Proprietor: Tammermatic Oy, 33300 Tampere (FI)
(72) Inventor: Palo, Asko, 37120 Nokia (FI)
(74) Representative: Kolster Oy Ab

(56) References cited:
- JP-A- H10 338 103
- JP-A- 2000 247 214
- JP-A- 2006 312 333
- US-A1- 2007 151 054

## Description

### Background of the invention

The invention relates to a method for washing or drying a vehicle, the method comprising determining a longitudinal virtual profile of the vehicle, moving the vehicle and an overhead unit of an apparatus for washing and/or drying the vehicle in relation to one another in a longitudinal direction of the vehicle, determining a position of the overhead unit in relation to the vehicle and controlling the position of the overhead unit in relation to the vehicle by continuously controlling the position of the overhead unit in relation to the vehicle by a basic control of the overhead unit based on the determined position of the overhead unit in relation to the vehicle and by acting on the basic control of the overhead unit, when necessary, by an additional control of the overhead unit based on the longitudinal virtual profile of the vehicle.

The invention further relates to a washing and/or drying apparatus for a vehicle, the apparatus comprising at least one washing and/or drying apparatus of a vehicle provided with at least one overhead unit, at least one measuring element for measuring at least one measuring signal indicating a position of the overhead unit in relation to the vehicle, at least one control unit for controlling the position of the overhead unit in relation to the vehicle, the control unit comprising a basic control of the overhead unit which is configured to control the position of the overhead unit in relation to the vehicle on the basis of the measuring signal indicating the position of the overhead unit in relation to the vehicle, means for determining a longitudinal virtual profile of the vehicle and at least one control unit comprising an additional control based on the longitudinal virtual profile of the vehicle, whereby the position of the overhead unit in relation to the vehicle is arranged to be controlled by a continuous control of the position of the overhead unit in relation to the vehicle by a basic control of the overhead unit and by acting on the basic control of the overhead unit, when necessary, by an additional control of the overhead unit based on the longitudinal virtual profile of the vehicle.

Automated washing and/or drying of vehicles is carried out using apparatuses for washing and/or drying vehicles that comprise an overhead unit for cleaning or drying an upward surface of a vehicle. An overhead unit for a vehicle wash with brushes typically comprises a washing brush rotated by an electric motor, whereas in a wash without brushes it comprises water spray nozzles. An overhead unit for drying a vehicle typically comprises blow nozzles for blowing drying air towards the vehicle.

In a wash with brushes, the position of the overhead unit in relation to the vehicle is typically determined on the basis of the current or power required by the electric motor to rotate the washing brush. The current or power required by the electric motor is proportional to the proximity of the vehicle to be washed to the washing brush, i.e. to the force at which the bristles of the washing brush contact the surface of the vehicle. As the amount of current or power required by the electric motor grows too high, the contact of the washing brush against the vehicle surface is considered too heavy and the washing brush is moved further away from the vehicle. Likewise, when the amount of current or power required by the electric motor is too low, the contact of the washing brush against the vehicle surface is considered too light for a good washing result to be achieved, in which case the washing brush may be moved closer to the vehicle.

In a brushless wash and drying the position of the overhead unit in the vehicle height direction is determined by means of photocell sensor pairs placed at opposite ends of the overhead unit. On the basis of whether a beam of light between the opposite photocell sensors is present or interrupted, it is possible to determine the position of the overhead unit in relation to the vehicle and then control the position of the overhead unit in relation to the vehicle for keeping the overhead unit at a suitable distance from the vehicle surface with regard to the washing or drying result.

A problem with currently used washing and/or drying apparatuses arises from different auxiliary devices attached to the vehicle, such as ski boxes or transport boxes attached on top of passenger cars and vans. The use of such boxes may leave a space between the box and the front part or the rear part of the vehicle, which the overhead unit of the washing and/or drying apparatus may enter without the situation being noticed by the washing and/or drying apparatus. Hence, in a situation where the overhead unit enters in a longitudinal direction of the vehicle under the box between the vehicle and the box and starts to rise upward at a point where the vehicle's height begins to grow, the overhead unit may raise the box from below and break the box or its fastening. Moreover, particularly when an overhead unit provided with a washing brush is used, a problem arises from the open platform of pick-up vans as in this area the washing brush may be pressed downwards at an excessive force because when the surface to be washed is extremely small, the current or power required by the electric motor to rotate the washing brush does not necessarily increase to the extent that this problem situation would be automatically detected. If the washing brush is pressed too low at the open platform portion of the pick-up van, the vehicle to be washed may become damaged or the washing brush may bend beyond usability.

EP publication 1995133 A2 discloses a solution for controlling an overhead unit of a vehicle washing apparatus provided with a washing brush. In the publication the position of the washing brush in relation to the vehicle is controlled in an ordinary manner on the basis of the power used by the electric motor for rotating the washing brush. When the overhead unit moves to a position in the longitudinal direction of the vehicle where a control mode based on the magnitude of the power used by the electric motor for rotating the washing brush can no longer be used, the control of the overhead unit is changed to take place on the basis of a control mode based on the vehicle's side profile, the overhead unit of the washing apparatus being then moved at a distance from the vehicle determined by the geometry of the vehicle's side profile and the washing brush. However, the solution disclosed in EP publication 1995133 A2 is fairly complex because of the overhead unit control mode is changed back and forth. JP-publication JP 2000 247214 A discloses another solution for controlling a vehicle washing apparatus.

### Brief description of the invention

An object of the invention is to provide a novel solution for controlling an overhead unit of a vehicle washing and/or drying apparatus during the washing or drying of the vehicle.

The method of the invention is characterized by determining the position of the overhead unit in relation to the vehicle on the basis of at least one measuring signal indicating a distance of the overhead unit from the vehicle and by acting on the basic control of the overhead unit by changing with the additional control of the overhead unit the value of the at least one measuring signal indicating the distance of the overhead unit from the vehicle.

The washing and/or drying apparatus of the invention is characterized in that the basic control of the overhead unit is arranged to control the position of the overhead unit in relation to the vehicle on the basis of at least one measuring signal indicating the distance of the overhead unit from the vehicle and that the additional control of the overhead unit is arranged to act on the basic control of the overhead unit, the additional control of the overhead unit being arranged to change the value of the at least one measuring signal indicating the distance of the overhead unit from the vehicle.

The method for washing or drying a vehicle thus comprises moving the vehicle and the overhead unit of the vehicle washing and/or drying apparatus in relation to one another in a longitudinal direction of the vehicle, determining the position of the overhead unit in relation to the vehicle and controlling the position of the overhead unit in relation to the vehicle with a basic control of the overhead unit being based on the determined position of the overhead unit in relation to the vehicle. In addition, a longitudinal virtual profile of the vehicle is determined and the position of the overhead unit in relation to the vehicle is controlled by a continuous control of the position of the overhead unit in relation to the vehicle by the basic control of the overhead unit and acting on the basic control of the overhead unit, when necessary, by an additional control of the overhead unit based on the longitudinal virtual profile of the vehicle.

According to the solution, the overhead unit of the vehicle washing and/or drying apparatus is controlled simultaneously by the basic control of the overhead unit and the additional control of the overhead unit, the basic control of the overhead unit being based on a determined or measured position of the overhead unit in relation to the vehicle and the additional control of the overhead unit being based on the longitudinal virtual profile of the vehicle. The virtual profile of the vehicle allows an imaginary boundary surface to be formed around the vehicle to determine, with the geometry of the overhead unit taken into account, a boundary surface beyond which a specific point of the overhead unit may not be moved closer to the vehicle or additional devices attached thereto. In other words, the overhead unit is continuously controlled by the basic control, and the virtual profile provides a prohibited area for the basic control beyond which the basic control may not control the overhead unit. On the basis of the virtual profile of the vehicle the additional control of the overhead unit used at the same time as the basic control of the overhead unit thus ensures that the overhead unit is not moved closer to the vehicle than allowed by the distance determined according to the virtual profile or that the overhead unit is not moved to a prohibited area determined by the virtual profile in the longitudinal direction of the vehicle, which the basic control of the overhead unit alone does not detect.

Different embodiments of the solution are disclosed in the dependent claims.

### Brief description of figures

Some embodiments of the invention will be explained in greater detail in the attached drawings, in which
Figure 1 is a schematic side view of a vehicle;
Figure 2 is a schematic front view of a vehicle washing apparatus;
Figure 3 is a schematic front view of a second vehicle washing apparatus;
Figure 4 is a schematic flow diagram of a method associated with Figures 2 and 3 for washing a vehicle; and
Figure 5 is a schematic side view of a second vehicle;

In the figures, some embodiments of the invention are shown simplified for the sake of clarity. Like reference numerals refer to like parts in the figures.

### Detailed description of the invention

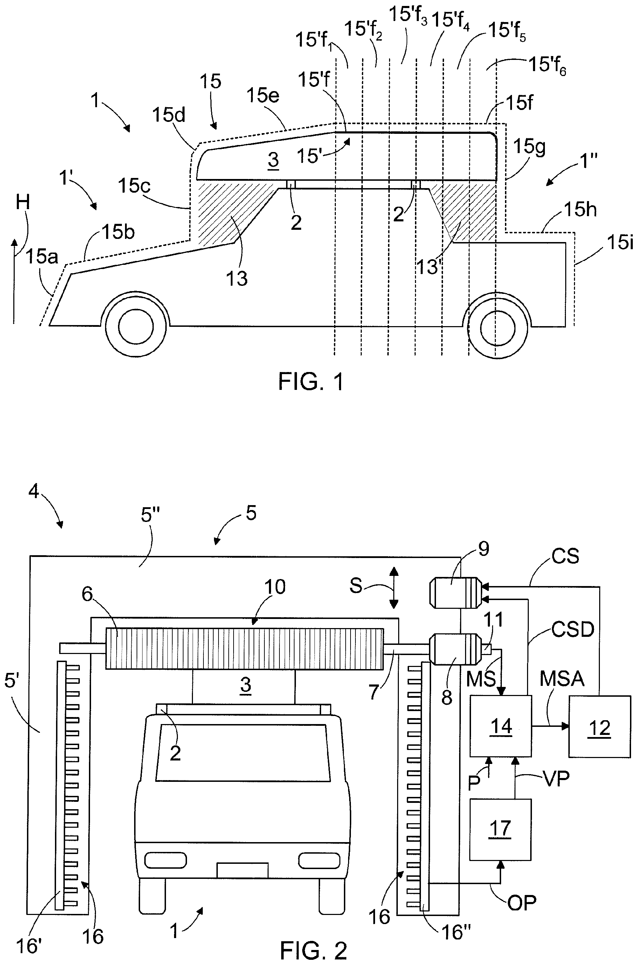

Figure 1 is a schematic side view of a vehicle 1 provided with a box 3, such as a ski box or a transport box, supported by roof racks 2 placed on the roof of the vehicle 1.

Figure 2 is a schematic front view of a washing apparatus 4 for washing the vehicle 1 provided with the box 3, for example, shown in Figure 1. The washing apparatus 4 of Figure 2 has a frame structure 5 and a washing brush 6, which is coupled by a shaft 7 to an electrically operated rotating motor 8, the rotating motor 8 rotating the washing brush 6 via a shaft 7. The rotating motor, the shaft 7 and the washing brush 6 via the shaft 7 may be supported to the frame structure 5 of the washing apparatus 4, for example to its vertical portion 5' or its horizontal portion 5" by methods known per se. The washing apparatus 4 disclosed in Figure 2 further includes an electrically operated lifting motor 9 that may change the position of the overhead unit 10 of the washing apparatus 4 formed by the washing brush 6 and the rotating motor 8 in relation to the vehicle 1, i.e. raise or lower in manner known per se by a person skilled in the art the overhead unit 10 in a height direction of the vehicle 1 shown schematically by arrow S.

The frame structure 5 of the washing apparatus 4 may be fixedly supported to its location, the frame structure 5 of the washing apparatus 4 forming, in a manner known per se, a stationary portal-type washing apparatus 4 of vehicle 1, the vehicle 1 moving during the washing in relation to the washing apparatus 4. Alternatively, the frame structure 5 of the washing apparatus 4 may be arranged to move to its location on rails, for example, the frame structure 5 of the washing apparatus 4 and the overhead unit 10 of the washing apparatus 4 associated with it moving during the wash in the longitudinal direction of the vehicle 1 while the vehicle 1 remains stationary.

The washing apparatus 4 of Figure 2 is further provided with a measuring element 11 in association with the rotating motor 8, such as a measuring sensor, measuring probe or other measuring device arranged to measure the current I or power P used by the rotating motor 8 when the rotating motor 8 rotates and causes the washing brush 6, in turn, to rotate via the shaft 7. When the washing brush 6 is rotated at a specific rotation speed, the closer the washing brush 6 is to the surface of the vehicle 1 to be washed, the heavier is the contact between the washing brush 6 and the surface of the vehicle 1 to be washed and the greater is the current I or power P used by the rotating motor 8. Similarly, the further away from the surface of the vehicle 1 to be washed the washing brush 6 is, the lighter is the contact between the washing brush 6 and the surface of the vehicle 1 to be washed and the smaller is the current I or power P used by the rotating motor 8. The current I or power P of the rotating motor 8 measured by the measuring element 11 thus forms a measurement signal MS indicating the position of the overhead unit 10 in relation to the vehicle 1.

Figure 2 further shows a first control unit 12 or a basic control unit 12, which contains the basic control of the overhead unit 10 configured to control the position of the overhead unit 10 in relation to the vehicle 1 on the basis of the measured current I or power P of the rotating motor 8, i.e. to control in practice the operation of the lifting motor 9 for lifting or lowering the overhead unit 10 in relation to the vehicle 1 in height direction H of the vehicle 1. On the basis of the basic control of the overhead unit 10, provided that the current I or power P used by the rotating motor 8 is greater than a predetermined value, i.e. the washing brush 6 is considered to be too close to the surface of the vehicle 1 to be washed, the basic control unit 12 is configured to control the lifting motor 9 on the basis of the basic program of the overhead unit 10 by the control signal CS to make the lifting motor 9 move the overhead unit 10 and the washing brush 6 in particular further away from the vehicle 1. Similarly, according to the basic control of the overhead unit 10, if the current I or power P used by the rotating motor 8 is lower than a predetermined value, i.e. the washing brush 6 is considered to be too far from the surface of the vehicle 1 to be washed for an optimal washing result to be achieved, the basic control unit 12 is configured to control the lifting motor 9 on the basis of the basic program of the overhead unit 10 by the control signal CS to make the lifting motor 9 move the overhead unit 10 and the washing brush 6 in particular closer to the vehicle 1. This control of the position of the overhead unit 10 in relation to the vehicle 1 on the basis of the measurement of the current I or the power P used by the rotating motor 8 forms a prior art means known per se for controlling the position of the overhead unit 10 in relation to the vehicle 1. The basic control unit 12 comprises the necessary components, such as a processor, memory and software code, for carrying out the basic control of the overhead unit 10.

In the basic control of the overhead unit 10 disclosed above for controlling the position of the overhead unit 10 in relation to the vehicle 1 a problem in the case of a vehicle 1 equipped with the box 3 of Figure 1 arises from the areas shown by the diagonal lines, i.e. a first area of diagonal lines 13 at a front part 1' of the vehicle 1 in height direction H of the vehicle left between the front part 1' of the vehicle 1 and the box 3, and a second area of diagonal lines 13' at a rear part 1" of the vehicle 1 in height direction H of the vehicle 1 left between the rear part 1' of the vehicle 1 and the box 3. The basic control of the overhead unit 10 based on the measurement of the current I or power P used by the rotating motor 8 does not detect when the washing brush 6 enters areas 13 or 13' and therefore when moving upward a washing brush 6 that has proceeded into the area 13 or 13' may tend to detach the box 3 from its fastenings. In order to prevent this kind of situation, the washing apparatus 4 of Figure 2 further includes a second control unit 14 or an additional control unit 14 configured to co-operate with the basic control unit 12 comprising the basic control of the overhead unit 10 to control the position of the overhead unit 10 in relation to the vehicle 1. The additional control unit 14 contains an additional control of the overhead unit 10 arranged to control the position of the overhead unit 10 in relation to the vehicle 1 on the basis of a longitudinal virtual profile 15 of the vehicle 1. The longitudinal virtual profile 15 of the vehicle 1 is shown in Figure 1 schematically by a broken line 15, and the profile comprises portions 15a to 15i. The longitudinal virtual profile 15 of the vehicle 1 forms an overall profile of the vehicle 1 and of additional devices, if any, fastened thereto, such as roof racks 2 and the box 3, at a predetermined distance from the vehicle 1, the profile in the embodiment of Figure 1 comprising only portions of a constant width or tapering portions in an upward height direction H of the vehicle 1. The virtual profile 15 is thus preferably formed by determining the highest point of the overall profile at each longitudinal position and determining the entire portion below it as a prohibited area. The virtual profile 15 allows a protected area or a safety area or a prohibited area to be formed around the vehicle 1 for the duration of the wash to prevent the control of the overhead unit 10 from allowing the overhead unit 10 into the area or closer to the vehicle than allowed by the area. The distance of the virtual profile 15 from the vehicle 1 is arranged on the basis of the geometry of the overhead unit 10, in Figure 2 in practise according to the geometry of the washing brush 6, so that a desired washing result is achieved. The virtual profile 15 may thus describe a desired track of the centre shaft of the washing brush 6, for example.

In the embodiment of Figure 2 the additional control unit 14 has been arranged between the measuring element 11 and the basic control unit 12, measurement signal MS of the measuring element 11 being transmitted to the additional control unit 14 that contains the information on the virtual profile 15 of the vehicle 1. As the washing of the vehicle 1 disclosed in Figure 1 proceeds from the front part 1' of the vehicle 1 towards the rear part 1" of the vehicle 1, for example, the basic control of the overhead unit 10 disclosed above may be used in a normal manner on portions 15a and 15b of the virtual profile 15 for controlling the position of the overhead unit 10 in relation to the vehicle 1, the magnitude or value of measuring signal MSA to be transferred from the additional control unit 14 to the basic control unit 12 corresponding to the magnitude or value of measuring signal MS. However, in order to prevent the washing brush 6 from entering the prohibited area 13, measurement value MS corresponding to the current I or power P measured by the measuring element 11 is increased in the additional control unit 14 at the end of portion 15b of the virtual profile 15 on the basis of the shape of the virtual profile 15 to make the magnitude or value of measuring signal MSA transferred by the additional control unit 14 to the basic control unit 12 greater than the magnitude or value of measuring signal MS measured by the measuring element 11. In other words, the basic control unit 12 is provided with a value of the current I or power P that is greater than a measured value corresponding to a real momentary washing situation. The basic control unit 12 thus interprets the washing brush 6 to be too close to the vehicle 1 and controls the lifting motor 9 to lift the washing brush 6 upward in accordance with portion 15c. In other words, at the end of portion 15b of the virtual profile 15 the measured value of the current I or power P used by the rotating motor 8 is increased on the basis of the shape of the virtual profile 15 by the additional control unit 14, the basic control unit 12 interpreting the washing brush 6 to be too close to the vehicle surface at the end of portion 15b of the virtual profile 15 and hence the basic control unit 12 is configured to send, in accordance with the basic program, the lifting motor 9 a control signal CS that corresponds to an artificially increased value of measured current I or power P that makes the lifting motor 9 to move the washing brush 6 upward in a manner indicated by portion 15c of the virtual profile. The artificial increasing of the current I or power P used by the rotating motor 8 taking place on the basis of the virtual profile 15 may be stopped at the end of portion 15c and on portions corresponding to portions 15d to 15i of the virtual profile 15 the control of the overhead unit 10 of the washing apparatus 4 may again take place on the basis of the measured value of the current I or power P used by the rotating motor 8 in accordance with the basic control of the overhead unit 10. However, the additional control of the overhead unit 10 based on the virtual profile 15 and implemented in the additional control unit 14 may still monitor the position of the overhead unit 10 in relation to the vehicle 1 on portions 15d to 15i of the virtual profile 15 to allow the additional control to prevent, when necessary, the overhead unit 10, i.e. the washing brush 6 in practice, from moving closer to the vehicle 1 than the distance determined by the virtual profile 15.

Similarly, as the washing of the vehicle 1 proceeds from the rear part 1" of the vehicle 1 towards the front part 1' of the vehicle 1 the basic control of the overhead unit 10 based on the magnitude of the current I or power P used by the rotating motor 8 may be used in a normal manner in portions 15i and 15h of the virtual profile 15 for keeping the washing brush 6 at a preferred distance for the washing result from the surface of the vehicle 1 to be washed. To prevent the washing brush 6 from entering the prohibited area 13', the basic control in question is acted on at the end of portion 15h of the virtual profile 15 by an additional control based on the virtual profile 15 to make the basic control unit 12 control the lifting motor 9 to raise the washing brush 6 in accordance with portion 15g. At the end of portion 15g the artificial increasing on the basis of the virtual profile 15 of the current I or power P measured by the measuring element 11 is stopped and the overhead unit 10 of the washing apparatus 4 may again be controlled on portions 15f to 15a of the virtual profile 15 by the basic control based on the measured value of the current I or power P used by the rotating motor 8, the additional control based on the virtual profile 15 and implemented in the additional control unit 14, however, still preventing when necessary the overhead unit from moving closer to the vehicle 1 than the distance indicated by the virtual profile 15.

On the basis of the longitudinal virtual profile 15 of the vehicle 1 an additional control based on the longitudinal virtual profile 15 of the vehicle 1 is thus formed in the additional control unit 14 so that the position of the overhead unit 10 of the washing apparatus 4 in relation to the vehicle 1 is controlled by the additional control together with the basic control. In other words, in the embodiment of Figures 1 and 2 the position of the overhead unit 10 in relation to the vehicle 1 is controlled by the additional control together with the basic control by continuously controlling the position of the overhead unit 10 in relation to the vehicle 1 by the basic control of the overhead unit 10 based on the measured value of the current I or power P used by the rotating motor 8 of the washing brush 6 and simultaneously used additional control based on the longitudinal virtual profile 15 of the vehicle 1 is used, when necessary, to act on the measured value of the current I or power P used by the rotating motor 8 so that the basic control of the overhead unit 10 assumes the overhead unit 10 to be closer to the vehicle 1 that it in reality is, which enables to prevent the overhead unit 10 from moving either too close to the vehicle 1 or to different prohibited areas, such as the areas 13 and 13' of diagonal lines in Figure 1, associated with the vehicle 1 and the additional devices fastened thereto. The additional control based on the virtual profile 15 is thus used, when necessary, to act on the continuously operating basic control of the overhead unit 10 or, in other words, the continuously operating basic control of the overhead unit is cheated by the additional control based on the virtual profile 15 to make the basic control believe that the overhead unit 10 is closer to the vehicle 11 than it really is, the basic control of the overhead unit 10 then moving the overhead unit 10 further away from the vehicle. The direction where the overhead unit is to be moved to at each point to take it further away from the vehicle is determined in the basic control. For example, at the roof of the vehicle the overhead unit is moved upward and at the front and rear buffers of the vehicle the overhead unit is moved in a horizontal direction. Thus the solution contains no complicated changes of control between the different control modes. Since both the basic control of the overhead unit 10 and the additional control are used at the same time, the vehicle 1 may also be washed by the additional control based on the virtual profile 15 alone if for example due to a malfunction or a failure the basic control of the overhead unit 10 does not function, this adding to the operating safety of the washing apparatus 4. In that case the additional control unit 14 may directly control the operation of the lifting motor 9 as schematically shown by arrow CSD for moving the overhead unit 10 on a track corresponding to the shape of the virtual profile 15. The basic control unit 14 naturally comprises all the necessary components, such as a processor, memory and software code, for carrying out the basic control based on the virtual profile 15 of the vehicle 1.

For the additional control based on the longitudinal virtual profile 15 of the vehicle 1 to be able to act on the basis of the virtual profile 15 on the control of the position of the overhead unit 10 in relation to the vehicle 1 at the right moment, the actual position of the overhead unit 10 in the longitudinal direction of the vehicle 1 in relation to the virtual profile 15 must be known. Figure 2 shows a schematic arrow P depicting the real position of the overhead unit 10 in the longitudinal direction of the vehicle 1, which position may be determined during the wash on the basis of the distance travelled by the washing apparatus 4 or the distance travelled by the vehicle 1, for example.

Figure 2 further shows a light curtain 16 comprising a first photocell sensor array 16' acting as a transmitter and a second photocell sensor array 16" acting as a receiver, which may be used for determining the longitudinal virtual profile 15 of the vehicle 1. In the solution according to Figure 2 the first photocell sensor array 16' is arranged to a vertical left-hand side portion 5' of the frame structure 5 of the washing apparatus 4 in Figure 2 and the second photocell sensor array 16" is arranged to the vertical right-hand side portion 5' of the frame structure 5. In that case the virtual profile 15 of the vehicle 1 may be determined before the actual wash is started by moving the frame structure 5 of the washing apparatus 4 in the longitudinal direction of the vehicle 1 for a distance extending over at least the entire length of the vehicle 1 and capturing at the same time with the light curtain 16 the shape of the overall profile of the vehicle 1 and that of any additional devices attached thereto. The operation of the light curtain 16 may be based on infrared light, for example. The virtual profile 15 is obtained by dividing the above-mentioned overall profile description into portions of a specific length in the longitudinal direction of the vehicle 1 and determining the location of the virtual profile in height direction H of the vehicle 1 to be at the suitable distance determined by the geometry of the overhead unit 10 from the highest point of the vehicle or an additional device thereof seen in the portion of the overall profile so as to obtain a desired washing result. The number of portions in the overall profile is typically very high compared to the number of portions 15a to 15i of the virtual profile 15, for example, disclosed in Figure 1 or, in other words, a longitudinal portion of the vehicle 1 corresponding to one virtual profile portion is divided into a plural number of overall profile portions to determine points of one portion 15a to 15i of the virtual profile 15. This is schematically depicted in Figure 1, where a bolded contour and reference numeral 15'f on portion 15f of the virtual profile 15 shows the area of the longitudinal overall profile 15' of the vehicle 1 in which the portion of the virtual profile 15 is determined. When the virtual profile 15 is being determined, the area 15'f of the overall profile 15 is further divided into a plural number of successive portions 15'f₁, 15'f₂, 15'f₃, 15'f₄, 15'f₅ and 15'f₆ shown schematically by broken lines, on the basis of which portion 15f of the virtual profile 15 is determined as disclosed above. The determining of the virtual profile 15 may be carried out in a determining unit 17 of the virtual profile 15 on the basis of an overall profile OP measured with the light curtain 16. The determining unit 17 of the virtual profile 15 may be a computer, for example, or a similar device containing a suitable software code for determining the virtual profile and from which the virtual profile 15 or information or a description corresponding to it may be transferred to the additional control unit 14 in the way schematically shown by arrow VP. The virtual profile 15 may be transferred to the additional control unit 14 before the washing of the vehicle 1 starts, or information describing the shape of the virtual profile 15 may be transferred to the additional control unit as the washing of the vehicle 1 proceeds. Naturally, it is also possible to have more than one light curtain 16.

If the washing apparatus comprises a fixedly placed portal-type washing apparatus 4, the light curtain 16 may be placed before the washing apparatus 4 to allow the light curtain 16 to capture the overall profile of the vehicle 1 and any additional devices fastened thereto as the vehicle 1 travels towards the washing apparatus 4.

Although in Figure 2 the basic control unit 12, the additional control unit 14 and the determining unit 17 of the virtual profile 15 are shown as separate devices, the devices and the software codes used therein may also be integrated together. When the additional control unit 14 and the determining unit 17 of the virtual profile 15 are implemented as units separate from the basic control unit 12, the disclosed additional control of the overhead unit 10 may be easily introduced into use also retrofitted into washing and/or drying apparatuses already in use.

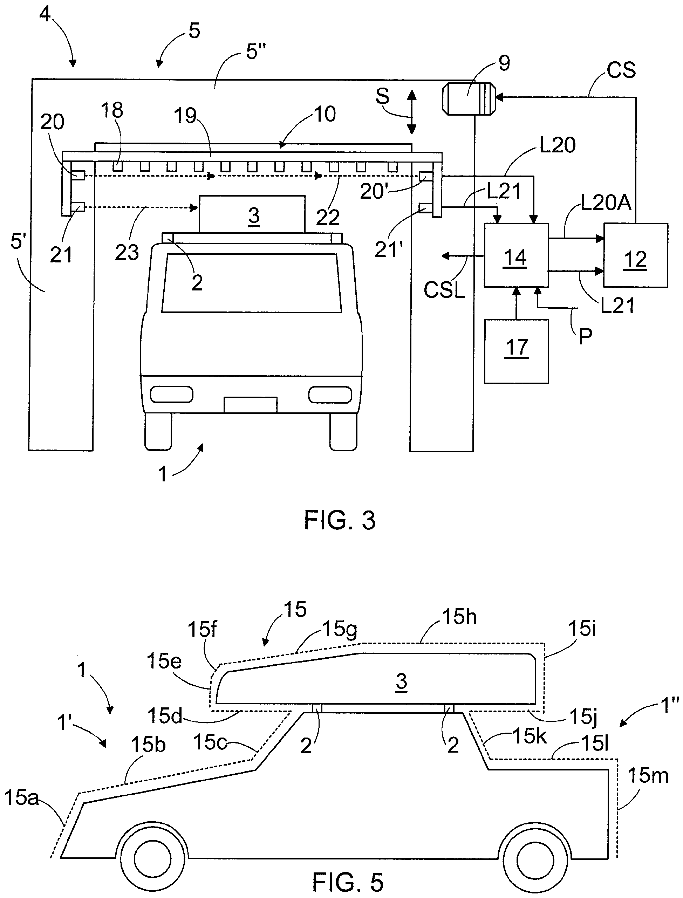

Figure 3 is a schematic front view of a second washing apparatus 4, in which the overhead unit 10 comprises washing nozzles 18 instead of the washing brush 6 for spraying wash liquid towards the vehicle 1. The washing nozzles 18 are fastened to a bracket 19. The overhead unit 10 formed by the washing nozzles 18 and the bracket 19 may be raised or lowered in relation to the vehicle 1 in the height direction of the vehicle 1 in a manner known per se by a skilled professional as schematically shown by arrow S.

The overhead unit 10 of the washing apparatus 4 of Figure 3 further includes photocell sensors placed at opposite ends of the bracket 19, of which photocell sensors 20 and 20' form a first photocell sensor pair and photocell sensors 21 and 21' form a second photocell sensor pair, and thus the photocell sensors 20 and 21, for example, may serve as transmitters of light and photocell sensors 20' and 21'as receivers of light. The first photocell sensor pair 20, 20' is arranged higher in height direction H of the vehicle 1 than the second photocell sensor pair 21, 21'. Three photocell sensor pairs are typically provided, the second photocell sensor pair 21, 21' being placed in front of the first photocell sensor pair 20, 20' when seen in the longitudinal direction of the vehicle 1 and a third photocell sensor pair corresponding to the second photocell sensor pair 21, 21', located behind the second photocell sensor pair 21, 21' in Figure 3 and not shown in the figures for the sake of clarity, is placed in a manner known per se on the same height as the second photocell sensor pair 21, 21' to the rear side of the first photocell sensor pair 20, 20' when seen in the longitudinal direction of the vehicle 1. The operation of the photocell sensors may be based on infrared light, for example. For the sake of clarity, Figure 3 does not show the light curtain 16 used for determining the virtual profile 15 of the vehicle 1.

The position of the overhead unit 10 in relation to the vehicle 1 may be determined on the basis of which light-receiving sensors 20' and 21'detect the light transmitted from sensors 20 and 21. In the case of Figure 3 a beam of light depicted by arrow 22 is present between sensors 20 and 20', whereas the beam of light depicted by arrow 23 between sensors 21 and 21' has been broken because of the box 3. Figure 3 further shows a measuring signal L20, which is an on/off type measuring signal, transmitted from the photocell sensor 20', the signal depicting the existence or absence of a beam of light between photocell sensors 20, 20'. Likewise, a measuring signal L21 from the photocell sensor 21' is also an on/off type measuring signal depicting the existence or absence of a beam of light between photocell sensors 21, 21'. According to the basic control of the overhead unit 10 based on the photocell sensors 20, 20', 21 and 21', if measuring signal L20 coming from the sensor 20' is on, i.e. if there is a beam of light 22 between the photocell sensors 20 and 20', but measuring signal L21 from sensor 21' is off, i.e. the beam of light between the photocell sensors 21 and 21' - or between the third photocell sensor pair not shown in the figures for the sake of clarity - has been broken in the manner shown in Figure 3, the basic control of the overhead unit 10 interprets the overhead unit 10 to be at a suitable distance from the vehicle 1. However, if both measuring signal L20 from the sensor 20' and measuring signal 21 from the sensor 21 are off, i.e. if both the beam of light between the photocell sensors 20 and 20' and the beam of light between the photocell sensors 21 and 21' are broken, the basic control of the overhead unit 10 interprets the overhead unit 10 to be too close to the vehicle 1 and the basic control unit 12 of the overhead unit 10 controls the lifting motor 9 by the control signal CS to move the overhead unit 10 further away from the vehicle 1 until a beam of light again exists between the photocell sensors 20 and 20'. On the other hand, if both measuring signal L20 from the sensor 20' and measuring signal from the sensor 21' are on, i.e. if there is a beam of light between both the photocell sensors 20 and 20' and the photocell sensors 21 and 21', the basic control of the overhead unit 10 interprets the overhead unit 10 to be too far from the vehicle 1 and the basic control unit 12 of the overhead unit 10 controls the lifting motor 9 by the control signal CS to move the overhead unit 10 closer to the vehicle 1 until the beam of light between the photocell sensors 21 and 21' breaks again. This control of the position of the overhead unit 10 in relation to the vehicle 1 on the basis of the existence or absence of a beam of light between the photocell sensors forms a prior art means known per se for controlling the position of the overhead unit 10 equipped with washing nozzles 18 in relation to the vehicle 1.

To ensure that the overhead unit 10 provided with the washing nozzles 18 does not drift into the prohibited areas 13 and 13' during the washing of the vehicle of Figure 1, the washing apparatus 4 of Figure 3 further includes an additional control unit 14 based on the virtual profile 15 of the vehicle 1 and configured to co-operate with the basic control unit 12 comprising the basic control of the overhead unit 10 to control the position of the overhead unit 10 in relation to the vehicle 1. In the embodiment of Figure 3 the basic control unit 12 and the additional control unit 14 operate similarly as disclosed with reference to Figure 2. In the embodiment of Figure 3 the virtual profile may be determined to be different than in the embodiment of Figure 2, for example the distance of the virtual profile from the actual surface of the vehicle may be different. As the washing of the vehicle 1 in the embodiment of Figure 3 proceeds from the front part 1' towards the rear part 1", the additional control unit 14 is configured to change at the end of portion 15b of the virtual profile 15 the value of the measuring signal L20 indicating the existence of a beam of light between the photocell sensors 20 and 20' to indicate an absence of a beam of light between the photocell sensors 20 and 20', which is indicated by measuring signal L20A transmitted from the additional control unit 14 to the basic control unit 12. In consequence, the basic control unit 12 assumes the overhead unit 10 to be too close to the vehicle 1 and controls the lifting motor 9 to move the overhead unit 10 further away from the vehicle 1, thus preventing the overhead unit 10 from drifting in the prohibited area 13. Similarly, the additional control unit 14 is arranged to influence at the end of portion 15h of the virtual profile 15 of measuring signal L20 as the washing of the vehicle 1 proceeds from the front part 1' of the vehicle 1 towards the rear part 1". Since the basic control of the overhead unit 10 to be carried out in the basic control unit 12 is arranged to move the overhead unit 10 closer to the vehicle 1 if a beam of light is established between the photocell sensor pair 21 and 21' or the corresponding third photocell sensor pair not disclosed in the figures, the additional control of the overhead unit 10 does not need to change the value of measuring signal L21 but the additional control unit 14 may transmit the value of measuring signal L21 to the basic control unit 12 as such, or the value of measuring signal L21 may be transmitted directly from the sensor 21' to the basic control unit 12.

The embodiment of Figure 3 may also be used in a drying machine of a vehicle 1 for drying the vehicle 1, in which the washing nozzles 18 shown in Figure 3 may be replaced by drying nozzles blowing drying air.

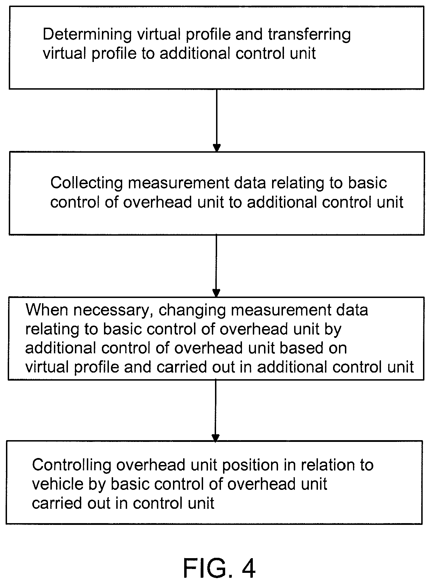

Figure 4 further shows a schematic flow diagram of an operating principle of the embodiments disclosed in Figures 2 and 3.

In the embodiments of Figures 2 and 3 the additional control of the overhead unit 10 is thus arranged to change, when necessary, the values of measuring signals transmitted to the basic control unit 12 that carries out the basic control of the overhead unit 10, such as the current I or power P of the rotating motor 8 of the washing brush 6 or the measuring signal indicating the existence of a beam of light between the photocell sensor pairs 20, 20'. Alternatively, however, the additional control of the overhead unit 10 could be configured to change on the basis of the virtual profile 15 the control signal CS determined by the basic control unit 12 on the basis of the actual measuring signals and be transmitted to the lifting motor 9 of the overhead unit 10.

Figure 5 is a schematic side view of a second vehicle 1 provided with a box 3, such as a ski box or a transport box, supported by roof brackets 2 placed on the roof of the vehicle 1, the outer appearance of the vehicle 1 of Figure 5 and the box 3 fastened thereto corresponding to the vehicle 1 and the box 3 fastened thereto disclosed in Figure 1. Figure 5 further shows a second virtual profile 15 of the vehicle 1, the profile comprising portions 15a to 15m. The virtual profile 15 of the vehicle 1 shown in Figure 5 does not include any specific prohibited areas 13 and 13', such as those in Figure 1, but the virtual profile 15 allows the overhead unit 10 of the washing apparatus 4 to enter also between the vehicle 1 and the box 3 in the longitudinal direction of the vehicle 1. In the embodiment of the virtual profile 15 in Figure 5 the virtual profile further comprises broadening areas in the height direction H of the vehicle. When the washing of the vehicle 1 shown in Figure 5 proceeds from the front part 1' of the vehicle 1 towards the rear part 1" of the vehicle 1, the control of the overhead unit 10 may be based in a normal manner on the basic control of the overhead unit 10 all the way to the end of portion 15c of the virtual profile 15. When the overhead unit 10 comprises a washing brush 6, at the end of portion 15c of the virtual profile 15 the additional control unit 14 may provide the basic control unit 12 with current I or power P of constant value of the rotating motor 8, in which case the basic control unit 12 does not attempt to change the position of the overhead unit 10 in relation to the vehicle 1. Alternatively, when the overhead unit 10 comprises photocell sensor pairs 20, 20', 21, 21' the additional control unit 14 may provide the basic control unit with a value of measuring signal L20 indicating, contrary to reality, a beam of light between the photocell sensors 20 and 20', in which case the basic control unit 12 does not attempt to change the position of the overhead unit 10 in relation to the vehicle 1. For the overhead unit 10 to continue following portion 15d of the virtual profile 15, the additional control of the overhead unit 10 may be arranged to control the position of the overhead unit 10 in the longitudinal direction of the vehicle 1 by control signal CSL shown schematically in Figure 3, in which case the washing apparatus 4 may be moved in the longitudinal direction of the vehicle 1 in relation to the vehicle 1 which is stationary or the vehicle 1 may be moved in relation to the washing apparatus 4 which is stationary by a means known per se, if the overhead unit 10 alone cannot be moved in relation to the vehicle 1.

In some cases, the features disclosed in this application may be used as such, irrespective of other features. On the other hand, when necessary, the features disclosed in this application may be combined to provide different combinations.

The drawings and the related description are only intended to illustrate the idea of the invention. The details of the invention may vary within the scope of the claims.

## Claims

1. A method for washing or drying a vehicle (1), the method comprising
determining a longitudinal virtual profile (15) of the vehicle (1);
moving the vehicle (1) and an overhead unit (10) of an apparatus (4) for washing and/or drying the vehicle (1) in relation to one another in a longitudinal direction of the vehicle (1);
determining a position of the overhead unit (10) in relation to the vehicle (1); and
controlling the position of the overhead unit (10) in relation to the vehicle (1) by continuously controlling the position of the overhead unit (10) in relation to the vehicle (1) by a basic control of the overhead unit (10) based on the determined position of the overhead unit (10) in relation to the vehicle (1) and by acting on the basic control of the overhead unit (10), when necessary, by an additional control of the overhead unit (10) based on the longitudinal virtual profile (15) of the vehicle (1);
**characterised by**
determining the position of the overhead unit (10) in relation to the vehicle (1) on the basis of at least one measuring signal (MS, L20, L21) indicating a distance of the overhead unit (10) from the vehicle (1) and by acting on the basic control of the overhead unit (10) by changing with the additional control of the overhead unit (10) the value of said at least one measuring signal (MS, L20) indicating the distance of the overhead unit (10) from the vehicle (1).

2. A method as claimed in claim 1, **characterised by** changing with the additional control of the overhead unit (10) the value of the measuring signal (MS, L20) indicating the distance of the overhead unit (10) from the vehicle (1) so that the basic control of the overhead unit (10) assumes the overhead unit (10) to be closer to the vehicle (1) than it actually is.

3. A method as claimed in any one of the preceding claims, **characterised in that** the virtual profile (15) forms a prohibited area where the basic control is not allowed to control the overhead unit (10) to.

4. A method as claimed in claim 3, **characterised by** determining the longitudinal virtual profile (15) of the vehicle (1) by determining the highest point of the overall profile of the vehicle (1) in each longitudinal position of the vehicle (1) and determining the entire portion below it as a prohibited area.

5. A method as claimed in any one of the preceding claims, **characterised in that** the overhead unit (10) comprises a washing brush (6) to be rotated by an electrically operated rotating motor (8) and by determining the position of the overhead unit in relation to the vehicle (1) on the basis of current (I) or power (P) used by the rotating motor (8).

6. A method as claimed in claim 5, **characterised by** measuring the current (I) or power (P) of the rotating motor (8) and controlling with the basic control of the overhead unit (10) the position of the overhead unit (10) in relation to the vehicle (1) on the basis of a measurement of the current (I) or power (P) of the rotating motor (8) so that when the value of the measured current (I) or power (P) exceeds a predetermined threshold value the overhead unit (10) is moved further away from the vehicle (1) and when the value of the measured current (I) or power (P) remains below the predetermined threshold value, the overhead unit (10) is moved towards the vehicle (1).

7. A method as claimed in claim 5 or 6, **characterised by** changing on the basis of the virtual profile (15), when necessary, the measured value of the current (I) or power (P) used by the rotating motor (8) with the additional control of the overhead unit (10), the measured value of the current (I) or power (P) used by the rotating motor (8) being increased by applying the additional control of the overhead unit (10) on the basis of the virtual profile (15) of the vehicle (1).

8. A method as claimed in any one of claims 1 to 4, **characterised in that** the overhead unit (10) comprises at least one washing nozzle (18) and at least one drying nozzle and that the overhead unit (10) further comprises at least one first photocell sensor pair (20, 20') arranged at opposite ends of the overhead unit (10) and at least one second photocell sensor pair (21, 21'), the first photocell sensor pair (20, 20') being placed higher in the height direction (H) of the vehicle (1) than the second photocell sensor pair (21, 21'), and by determining the position of the overhead unit in relation to the vehicle (1) on the basis of the existence and/or absence of a beam of light between the first photocell sensor pair (20, 20') and/or a beam of light between the second photocell sensor pair (21, 21').

9. A method as claimed in claim 8, **characterised by** controlling with the basic control of the overhead unit (10) the position of the overhead unit (10) in relation to the vehicle (1) so that when a beam of light between the first photocell sensor pair (20, 20') is broken, the overhead unit (10) is moved further away from the vehicle (1) and when a beam of light between the second photocell sensor pair (21, 21') is established, the overhead unit (10) is moved towards the vehicle (1).

10. A method as claimed in claim 8 or 9, **characterised by** changing on the basis of the virtual profile (15), when necessary, with the additional control of the overhead unit (10) the value of the measuring signal (L20) indicating a beam of light between the first photocell sensor pair (20, 20') to be supplied to the basic control of the overhead unit (10) so that the basic control of the overhead unit (10) assumes that a beam of light between the first photocell sensor pair (20, 20') has been broken.

11. A washing and/or drying apparatus for a vehicle (1), comprising
at least one washing and/or drying apparatus (4) of a vehicle (1) provided with at least one overhead unit (10);
at least one measuring element (11, 20, 20', 21, 21') for measuring at least one measuring signal (MS, L20, L21) indicating a position of the overhead unit (10) in relation to the vehicle (1);
at least one control unit (12) for controlling the position of the overhead unit (10) in relation to the vehicle (1), the control unit (12) comprising a basic control of the overhead unit (10) which is configured to control the position of the overhead unit (10) in relation to the vehicle (1) on the basis of the measuring signal (MS, L20, L21) indicating the position of the overhead unit (10) in relation to the vehicle (1);
means for determining a longitudinal virtual profile (15) of the vehicle (1); and
at least one control unit (14) comprising an additional control based on the longitudinal virtual profile (15) of the vehicle (1), whereby the position of the overhead unit (10) in relation to the vehicle (1) is arranged to be controlled by a continuous control of the position of the overhead unit (10) in relation to the vehicle (1) by the basic control of the overhead unit (10) and by acting on the basic control of the overhead unit (10), when necessary, by an additional control of the overhead unit (10) based on the longitudinal virtual profile (15) of the vehicle (1);
**characterised in that**
the basic control of the overhead unit (10) is arranged to control the position of the overhead unit (10) in relation to the vehicle (1) on the basis of at least one measuring signal (MS, L20, L21) indicating the distance of the over-head unit (10) from the vehicle (1) and that the additional control of the over-head unit (10) is arranged to act the basic control of the overhead unit (10), the additional control of the overhead unit (10) being arranged to change the value of said at least one measuring signal (MS, L20) indicating the distance of the overhead unit (10) from the vehicle (1).

12. A washing and/or drying apparatus for a vehicle (1) as claimed in claim 11, **characterised in that** the additional control of the overhead unit (10) is arranged to change the value of the measuring signal (MS, L20) indicating the distance of the overhead unit (10) from the vehicle (1) so that the basic control of the overhead unit (10) assumes the overhead unit (10) to be closer to the vehicle (1) than it actually is.

13. A washing and/or drying apparatus for a vehicle (1) as claimed in claim 11 or 12, **characterised in that** the virtual profile (15) is arranged to form a prohibited area where the basic control is not allowed to control the overhead unit (10) to.

14. A washing and/or drying apparatus for a vehicle (1) as claimed in claim 13, **characterised in that** that the washing and/or drying apparatus of the vehicle (1) includes at least one light curtain (16) for capturing an overall profile of the vehicle (1) and at least one apparatus (17) for determining the virtual profile (15) to determine the highest point of the overall profile in each longitudinal position of the vehicle (1) and to determine the entire portion below it as a prohibited area.

15. A washing and/or drying apparatus for a vehicle (1) as claimed in any one of claims 11 to 14, **characterised in that** the overhead unit (10) comprises a washing brush (6) rotated by an electrically operated rotating motor (8) and **in that** the measuring element (11) is configured to measure the current (I) or power (P) used by the rotating motor (8).

16. A washing and/or drying apparatus for a vehicle (1) as claimed in claim 15, **characterised in that** when the value of the measured current (I) or power (P) exceeds a predetermined threshold value, the basic control of the overhead unit (10) is arranged to control the overhead unit further away from the vehicle (1) and **in that** when the measured value of the current (I) or power (P) remains below the predetermined threshold value, the basic control of the overhead unit (10) is arranged to control the overhead unit (10) towards the vehicle (1).

17. A washing and/or drying apparatus for a vehicle (1) as claimed in claim 15 or 16, **characterised in that** the additional control of the overhead unit (10) is configured to increase, when necessary, the measured value of the current (I) or power (P) used by the rotating motor (8) on the basis of the virtual profile (15) of the vehicle (1).

18. A washing and/or drying apparatus for a vehicle (1) as claimed in any one of claims 11 to 14, **characterised in that** the overhead unit (10) comprises at least one washing nozzle (18) or at least one drying nozzle and that the overhead unit (10) further comprises at least one first photocell sensor pair (20, 20') and at least one second photocell sensor pair (21, 21') arranged at opposite ends of the overhead unit (10), the first photocell sensor pair (20, 20') being placed higher in the height direction (H) of the vehicle (1) than the second photocell sensor pair (21, 21'), and **in that** the position of the overhead unit in relation to the vehicle (1) is arranged to be determined on the basis of the existence and/or absence of a beam of light between the first photocell sensor pair (20, 20') and/or a beam of light between the second photocell sensor pair (21, 21').

19. A washing and/or drying apparatus for a vehicle (1) as claimed in claim 18, **characterised in that** the basic control of the overhead unit (10) is arranged to control the position of the overhead unit (10) in relation to the vehicle (1) so that when a beam of light between the first photocell sensor pair (20, 20') is broken, the overhead unit (10) is moved further away from the vehicle (1), and when a beam of light between the second photocell sensor pair (21, 21') is established, the overhead unit (10) is moved towards the vehicle (1).

20. A washing and/or drying apparatus for a vehicle (1) as claimed in claim 18 or 19, **characterised in that** the additional control of the overhead unit (10) is configured to change on the basis of the virtual profile (15), when necessary, the value of the measuring signal (L20) indicating a beam of light between the first photocell sensor pair (20, 20') to be supplied to the basic control of the overhead unit (10) so that the basic control of the overhead unit (10) assumes that the beam of light between the first photocell sensor pair (20, 20') has been broken.

## Patentansprüche

1. Verfahren zum Waschen oder Trockenen eines Fahrzeugs (1), wobei das Verfahren Folgendes umfasst
Bestimmen eines virtuellen Längsprofils (15) des Fahrzeugs (1);
Bewegen des Fahrzeugs (1) und einer Überkopfeinheit (10) einer Vorrichtung (4) zum Waschen und/oder Trocknen des Fahrzeugs (1) mit Bezug aufeinander in eine Längsrichtung des Fahrzeugs (1);
Bestimmen einer Position der Überkopfeinheit (10) mit Bezug auf das Fahrzeug (1); und
Steuern der Position der Überkopfeinheit (10) mit Bezug auf das Fahrzeug (1) durch kontinuierliches Steuern der Position der Überkopfeinheit (10) mit Bezug auf das Fahrzeug (1) durch eine Basissteuerung der Überkopfeinheit (10) auf Basis der bestimmten Position der Überkopfeinheit (10) mit Bezug auf das Fahrzeug (1) und durch Einwirken auf die Basissteuerung der Überkopfeinheit (10), soweit erforderlich, durch eine zusätzliche Steuerung der Überkopfeinheit (10) auf Basis des virtuellen Längsprofils (15) des Fahrzeugs (1);
**gekennzeichnet durch**
Bestimmen der Position der Überkopfeinheit (10) mit Bezug auf das Fahrzeug (1) auf Basis von mindestens einem Messsignal (MS, L20, L21), das einen Abstand der Überkopfeinheit (10) vom Fahrzeug (1) anzeigt, und durch Einwirken auf die Basissteuerung der Überkopfeinheit (10) durch Ändern des Wertes des mindestens einen Messsignals (MS, L20), das den Abstand der Überkopfeinheit (10) vom Fahrzeug (1) anzeigt, mit der zusätzlichen Steuerung der Überkopfeinheit (10).

2. Verfahren nach Anspruch 1, **gekennzeichnet durch** Ändern des Wertes des Messsignals (MS, L20), das den Abstand der Überkopfeinheit (10) vom Fahrzeug (1) anzeigt, mit der zusätzlichen Steuerung der Überkopfeinheit (10), derart, dass die Basissteuerung der Überkopfeinheit (10) annimmt, dass sich die Überkopfeinheit (10) näher am Fahrzeug (1) befindet, als sie tatsächlich ist.

3. Verfahren nach einem der vorhergehenden Ansprüche, **dadurch gekennzeichnet, dass** das virtuelle Profil (15) einen verbotenen Bereich bildet, in die die Basissteuerung die Überkopfeinheit (10) nicht steuern darf.

4. Verfahren nach Anspruch 3, **gekennzeichnet durch** Bestimmen des virtuellen Längsprofils (15) des Fahrzeugs (1) durch Bestimmen des höchsten Punktes des Gesamtprofils des Fahrzeugs (1) in jeder Längsposition des Fahrzeugs (1) und Bestimmen des ganzen Abschnitts darunter als einen verbotenen Bereich.

5. Verfahren nach einem der vorhergehenden Ansprüche, **dadurch gekennzeichnet, dass** die Überkopfeinheit (10) eine Waschbürste (6), die von einem elektrisch betriebenen Drehmotor (8) und durch Bestimmen der Position der Überkopfeinheit mit Bezug auf das Fahrzeug (1) auf Basis des Stroms (I) oder der Leistung (P), die vom Drehmotor (8) verwendet werden, zu drehen ist.

6. Verfahren nach Anspruch 5, **gekennzeichnet durch** Messen des Stroms (I) oder der Leistung (P) des Drehmotors (8) und Steuern der Position der Überkopfeinheit (10) mit Bezug auf das Fahrzeug (1) mit der Basissteuerung der Überkopfeinheit (10) auf Basis der Messung des Stroms (I) oder der Leistung (P) des Drehmotors (8), derart, dass, wenn der Wert des gemessenen Stroms (I) oder der gemessenen Leistung (P) einen vorbestimmten Schwellwert überschreitet, die Überkopfeinheit (10) weiter vom Fahrzeug (1) weg bewegt wird, und wenn der Wert des gemessenen Stroms (I) oder der gemessenen Leistung (P) unter dem vorbestimmten Schwellwert bleibt, die Überkopfeinheit (10) zum Fahrzeug (1) hin bewegt wird.

7. Verfahren nach Anspruch 5 oder 6, **gekennzeichnet durch** Ändern des gemessenen Wertes des Stroms (I) oder der Leistung (P), die vom Drehmotor (8) verwendet werden, mit der zusätzlichen Steuerung der Überkopfeinheit (10) auf Basis des virtuellen Profils (15), soweit erforderlich, wobei der gemessene Wert des Stroms (I) oder der Leistung (P), die vom Drehmotor (8) verwendet werden, durch Anwenden der zusätzlichen Steuerung der Überkopfeinheit (10) auf Basis des virtuellen Profils (15) des Fahrzeugs (1) erhöht wird.

8. Verfahren nach einem der Ansprüche 1 bis 4, **dadurch gekennzeichnet, dass** die Überkopfeinheit (10) mindestens eine Waschdüse (18) und mindestens eine Trocknungsdüse umfasst und dass die Überkopfeinheit (10) ferner mindestens ein erstes Fotozellensensorpaar (20, 20'), das an gegenüberliegenden Enden der Überkopfeinheit (10) angeordnet ist, und mindestens ein zweites Fotozellensensorpaar (21, 21') umfasst, wobei das erste Fotozellensensorpaar (20, 20') in der Höhenrichtung (H) des Fahrzeugs (1) höher platziert ist als das zweite Fotozellensensorpaar (21, 21'), und durch Bestimmen der Position der Überkopfeinheit mit Bezug auf das Fahrzeug (1) auf Basis des Vorhandenseins und/oder des Fehlens eines Lichtstrahls zwischen dem ersten Fotozellensensorpaar (20, 20') und/oder eines Lichtstrahls zwischen dem zweiten Fotozellensensorpaar (21, 21').

9. Verfahren nach Anspruch 8, **gekennzeichnet durch** Steuern der Position der Überkopfeinheit (10) mit Bezug auf das Fahrzeug (1) mit der Basissteuerung der Überkopfeinheit (10), derart, dass, wenn ein Lichtstrahl zwischen dem ersten Fotozellensensorpaar (20, 20') unterbrochen ist, die Überkopfeinheit (10) weiter vom Fahrzeug (1) weg bewegt wird, und wenn ein Lichtstrahl zwischen dem zweiten Fotozellensensorpaar (21, 21') aufgebaut ist, die Überkopfeinheit (10) zum Fahrzeug (1) hin bewegt wird.

10. Verfahren nach Anspruch 8 oder 9, **gekennzeichnet durch** Ändern des Wertes des Messsignals (L20), das einen Lichtstrahl zwischen dem ersten Fotozellensensorpaar (20, 20') anzeigt, der an die Basissteuerung der Überkopfeinheit (10) zu liefern ist, mit der zusätzlichen Steuerung der Überkopfeinheit (10) auf Basis des virtuellen Profils (15), soweit erforderlich, derart, dass die Basissteuerung der Überkopfeinheit (10) annimmt, dass ein Lichtstrahl zwischen dem ersten Fotozellensensorpaar (20, 20') unterbrochen wurde.

11. Wasch- und/oder Trocknungsvorrichtung für ein Fahrzeug (1), die Folgendes umfasst
mindestens eine Wasch- und/oder Trocknungsvorrichtung (4) eines Fahrzeugs (1), die mit mindestens einer Überkopfeinheit (10) versehen ist;
mindestens ein Messelement (11, 20, 20', 21, 21') zum Messen mindestens eines Messsignals (MS, L20, L21), das eine Position der Überkopfeinheit (10) mit Bezug auf das Fahrzeug (1) anzeigt;
mindestens eine Steuereinheit (12) zum Steuern der Position der Überkopfeinheit (10) mit Bezug auf das Fahrzeug (1), wobei die Steuereinheit (12) eine Basissteuerung der Überkopfeinheit (10) umfasst, die dazu ausgelegt ist, die Position der Überkopfeinheit (10) mit Bezug auf das Fahrzeug (1) auf Basis des Messsignals (MS, L20, L21), das die Position der Überkopfeinheit (10) mit Bezug auf das Fahrzeug (1) anzeigt, zu steuern;
ein Mittel zum Bestimmen eines virtuellen Längsprofils (15) des Fahrzeugs (1); und
mindestens eine Steuereinheit (14), die eine zusätzliche Steuerung umfasst, die auf dem virtuellen Längsprofil (15) des Fahrzeugs (1) basiert, wobei die Position der Überkopfeinheit (10) mit Bezug auf das Fahrzeug (1) angeordnet ist, durch eine kontinuierliche Steuerung der Position der Überkopfeinheit (10) mit Bezug auf das Fahrzeug (1) durch die Basissteuerung der Überkopfeinheit (10) und durch Einwirken durch eine zusätzliche Steuerung der Überkopfeinheit (10) auf die Basissteuerung der Überkopfeinheit (10), soweit erforderlich, auf Basis des virtuellen Längsprofils (15) des Fahrzeugs (1) gesteuert zu werden;
**dadurch gekennzeichnet, dass**
die Basissteuerung der Überkopfeinheit (10) angeordnet ist, die Position der Überkopfeinheit (10) mit Bezug auf das Fahrzeug (1) auf Basis von mindestens einem Messsignal (MS, L20, L21), das den Abstand der Überkopfeinheit (10) vom Fahrzeug (1) anzeigt, zu steuern, und dass die zusätzliche Steuerung der Überkopfeinheit (10) angeordnet ist, auf die Basissteuerung der Überkopfeinheit (10) einzuwirken, wobei die zusätzliche Steuerung der Überkopfeinheit (10) angeordnet ist, den Wert des mindestens einen Messsignals (MS, L20), das den Abstand der Überkopfeinheit (10) vom Fahrzeug (1) anzeigt, zu ändern.

12. Wasch- und/oder Trocknungsvorrichtung für ein Fahrzeug (1) nach Anspruch 11, **dadurch gekennzeichnet, dass** die zusätzliche Steuerung der Überkopfeinheit (10) angeordnet ist, den Wert des Messsignals (MS, L20), das den Abstand der Überkopfeinheit (10) vom Fahrzeug (1) anzeigt, zu ändern, derart, dass die Basissteuerung der Überkopfeinheit (10) annimmt, dass sich die Überkopfeinheit (10) näher am Fahrzeug (1) befindet, als sie tatsächlich ist.

13. Wasch- und/oder Trocknungsvorrichtung für ein Fahrzeug (1) nach Anspruch 11 oder 12, **dadurch gekennzeichnet, dass** das virtuelle Profil (15) angeordnet ist, einen verbotenen Bereich zu bilden, in den die Basissteuerung die Überkopfeinheit (10) nicht steuern darf.

14. Wasch- und/oder Trocknungsvorrichtung für ein Fahrzeug (1) nach Anspruch 13, **dadurch gekennzeichnet, dass** die Wasch- und/oder Trocknungsvorrichtung des Fahrzeugs (1) mindestens einen Lichtvorhang (16) zum Erfassen eines Gesamtprofils des Fahrzeugs (1) und mindestens eine Vorrichtung (17) zum Bestimmen des virtuellen Profils (15) beinhaltet, um den höchsten Punkt des Gesamtprofils in jeder Längsposition des Fahrzeugs (1) zu bestimmen und um den ganzen Abschnitt darunter als einen verbotenen Bereich zu bestimmen.

15. Wasch- und/oder Trocknungsvorrichtung für ein Fahrzeug (1) nach einem der Ansprüche 11 bis 14, **dadurch gekennzeichnet, dass** die Überkopfeinheit (10) eine Waschbürste (6) umfasst, die von einem elektrisch betriebenen Drehmotor (8) gedreht wird, und dadurch, dass das Messelement (11) dazu ausgelegt ist, den Strom (I) oder die Leistung (P), die vom Drehmotor (8) verwendet werden, zu messen.

16. Wasch- und/oder Trocknungsvorrichtung für ein Fahrzeug (1) nach Anspruch 15, **dadurch gekennzeichnet, dass**, wenn der Wert des gemessenen Stroms (I) oder der gemessenen Leistung (P) einen vorbestimmten Schwellwert überschreitet, die Basissteuerung der Überkopfeinheit (10) angeordnet ist, die Überkopfeinheit weiter vom Fahrzeug (1) weg zu steuern, und dadurch, dass, wenn der gemessene Wert des Stroms (I) oder der Leistung (P) unter dem vorbestimmten Schwellwert bleibt, die Basissteuerung der Überkopfeinheit (10) angeordnet ist, die Überkopfeinheit (10) zum Fahrzeug (1) hin zu steuern.

17. Wasch- und/oder Trocknungsvorrichtung für ein Fahrzeug (1) nach Anspruch 15 oder 16, **dadurch gekennzeichnet, dass** die zusätzliche Steuerung der Überkopfeinheit (10) dazu ausgelegt ist, den gemessenen Wert des Stroms (I) oder der Leistung (P), die vom Drehmotor (8) verwendet werden, soweit erforderlich, auf Basis des virtuellen Profils (15) des Fahrzeugs (1) zu erhöhen.

18. Wasch- und/oder Trocknungsvorrichtung für ein Fahrzeug (1) nach einem der Ansprüche 11 bis 14, **dadurch gekennzeichnet, dass** die Überkopfeinheit (10) mindestens eine Waschdüse (18) oder mindestens eine Trocknungsdüse umfasst und dass die Überkopfeinheit (10) ferner mindestens ein erstes Fotozellensensorpaar (20, 20') und mindestens ein zweites Fotozellensensorpaar (21, 21') umfasst, die an gegenüberliegenden Enden der Überkopfeinheit (10) angeordnet sind, wobei das erste Fotozellensensorpaar (20, 20') in der Höhenrichtung (H) des Fahrzeugs (1) höher platziert ist als das zweite Fotozellensensorpaar (21, 21'), und dass die Position der Überkopfeinheit mit Bezug auf das Fahrzeug (1) angeordnet ist, auf Basis des Vorhandenseins und/oder des Fehlens eines Lichtstrahls zwischen dem ersten Fotozellensensorpaar (20, 20') und/oder eines Lichtstrahls zwischen dem zweiten Fotozellensensorpaar (21, 21') bestimmt zu werden.

19. Wasch- und/oder Trocknungsvorrichtung für ein Fahrzeug (1) nach Anspruch 18, **dadurch gekennzeichnet, dass** die Basissteuerung der Überkopfeinheit (10) angeordnet ist, die Position der Überkopfeinheit (10) mit Bezug auf das Fahrzeug (1) derart zu steuern, dass, wenn ein Lichtstrahl zwischen dem ersten Fotozellensensorpaar (20, 20') unterbrochen ist, die Überkopfeinheit (10) weiter vom Fahrzeug (1) weg bewegt wird, und wenn ein Lichtstrahl zwischen dem zweiten Fotozellensensorpaar (21, 21') aufgebaut ist, die Überkopfeinheit (10) zum Fahrzeug (1) hin bewegt wird.

20. Wasch- und/oder Trocknungsvorrichtung für ein Fahrzeug (1) nach Anspruch 18 oder 19, **dadurch gekennzeichnet, dass** die zusätzliche Steuerung der Überkopfeinheit (10) dazu ausgelegt ist, den Wert des Messsignals (L20), das einen Lichtstrahl zwischen dem ersten Fotozellensensorpaar (20, 20') anzeigt, der an die Basissteuerung der Überkopfeinheit (10) zu liefern ist, soweit erforderlich, auf Basis des virtuellen Profils (15) zu steuern. derart, dass die Basissteuerung der Überkopfeinheit (10) annimmt, dass der Lichtstrahl zwischen dem ersten Fotozellensensorpaar (20, 20') unterbrochen wurde.

## Revendications

1. Procédé de lavage ou de séchage d'un véhicule (1), le procédé comprenant les étapes consistant à
déterminer un profil virtuel longitudinal (15) du véhicule (1) ;
déplacer le véhicule (1) et une unité en hauteur (10) d'un appareil(4) de lavage et/ou de séchage du véhicule (1) l'un par rapport à l'autre dans une direction longitudinale du véhicule (1) ;
déterminer une position de l'unité en hauteur (10) par rapport au véhicule (1) ; et
commander la position de l'unité en hauteur (10) par rapport au véhicule (1) en commandant en continu la position de l'unité en hauteur (10) par rapport au véhicule (1) par une commande de base de l'unité en hauteur (10) en se basant sur la position déterminée de l'unité en hauteur (10) par rapport au véhicule (1) et en agissant sur la commande de base de l'unité en hauteur (10), le cas échéant, par une commande supplémentaire de l'unité en hauteur (10) en se basant sur le profil virtuel longitudinal (15) du véhicule (1) ;
caractérisé en qu'il
détermine la position de l'unité en hauteur (10) par rapport au véhicule (1) sur la base d'au moins un signal de mesure (MS, L20, L21) indiquant une distance entre l'unité en hauteur (10) et le véhicule (1) et en agissant sur la commande de base de l'unité en hauteur (10) en modifiant à l'aide de la commande supplémentaire de l'unité en hauteur (10) la valeur dudit au moins un signal de mesure (MS, L20) indiquant la distance entre l'unité en hauteur (10) et le véhicule (1).

2. Procédé selon la revendication 1 **caractérisé en ce qu'**il modifie, à l'aide de la commande supplémentaire de l'unité en hauteur (10), la valeur du signal de mesure (MS, L20) indiquant la distance entre l'unité en hauteur (10) et le véhicule (1) de sorte que la commande de base de l'unité en hauteur (10) considère que l'unité en hauteur (10) est plus proche du véhicule (1) qu'elle ne l'est réellement.

3. Procédé selon l'une quelconque des revendications précédentes, **caractérisé en ce que** le profil virtuel (15) forme une zone interdite où la commande de base n'est pas autorisée à commander l'unité en hauteur (10).

4. Procédé selon la revendication 3, **caractérisé en ce qu'**il détermine le profil virtuel longitudinal (15) du véhicule (1) en déterminant le point le plus haut du profil général du véhicule (1) dans chaque position longitudinale du véhicule (1) et en déterminant la portion entière en-dessous de celui-ci comme une zone interdite.

5. Procédé selon l'une quelconque des revendications précédentes, **caractérisé en ce que** l'unité en hauteur (10) comprend une brosse de lavage (6) que doit faire tourner un moteur rotatif actionné électriquement (8) et **en ce qu'**il détermine la position de l'unité en hauteur par rapport au véhicule (1) sur la base d'un courant (I) ou d'une puissance (P) utilisé(e) par le moteur rotatif (8).

6. Procédé selon la revendication 5, **caractérisé en ce qu'**il mesure le courant (I) ou la puissance (P) du moteur rotatif (8) et commande, à l'aide de la commande de base de l'unité en hauteur (10), la position de l'unité en hauteur (10) par rapport au véhicule (1) sur la base d'une mesure du courant (I) ou de la puissance (P) du moteur rotatif (8) de sorte que lorsque la valeur du courant (I) ou de la puissance (P) mesuré(e) dépasse une valeur seuil prédéterminée, l'unité en hauteur (10) s'éloigne davantage du véhicule (1) et lorsque la valeur du courant (I) ou la puissance (P) mesuré (e) reste en-dessous de la valeur seuil prédéterminée, l'unité en hauteur (10) se rapproche du véhicule (1).

7. Procédé selon la revendication 5 ou 6, **caractérisé en ce qu'**il modifie, sur la base du profil virtuel (15), le cas échéant, la valeur mesurée du courant (I) ou de la puissance (P) utilisé(e) par le moteur rotatif (8) à l'aide de la commande supplémentaire de l'unité en hauteur (10), la valeur mesurée du courant (I) ou de la puissance (P) utilisé (e) par le moteur rotatif (8) augmentant lorsque la commande supplémentaire de l'unité en hauteur (10) est appliquée sur la base du profil virtuel (15) du véhicule (1).

8. Procédé selon l'une quelconque des revendications 1 à 4, **caractérisé en ce que** l'unité en hauteur (10) comprend au moins une buse de lavage (18) et au moins une buse de séchage et **en ce que** l'unité en hauteur (10) comprend en outre au moins une première paire de capteurs photoélectriques (20, 20') agencés à des extrémités opposées de l'unité en hauteur (10) et au moins une seconde paire de capteurs photoélectriques (21, 21'), la première paire de capteurs photoélectriques (20, 20') étant placée plus haut dans la direction de la hauteur (H) du véhicule (1) que la seconde paire de capteurs photoélectriques (21, 21'), et **en ce qu'**il détermine la position de l'unité en hauteur par rapport au véhicule (1) sur la base de la présence et/ou l'absence d'un faisceau lumineux entre la première paire de capteurs photoélectriques (20, 20') et/ou d'un faisceau lumineux entre la seconde paire de capteurs photoélectriques (21, 21').

9. Procédé selon la revendication 8, **caractérisé en ce qu'**il commande, à l'aide de la commande de base de l'unité en hauteur (10), la position de l'unité en hauteur (10) par rapport au véhicule (1) de sorte que lorsqu'un faisceau lumineux entre la première paire de capteurs photoélectriques (20, 20') est rompu, l'unité en hauteur (10) s'éloigne davantage du véhicule (1) et lorsqu'un faisceau lumineux entre la seconde paire de capteurs photoélectriques (21, 21') est établi, l'unité en hauteur (10) se rapproche du véhicule (1).

10. Procédé selon la revendication 8 ou 9, **caractérisé en ce qu'**il modifie, sur la base du profil virtuel (15), le cas échéant, à l'aide de la commande supplémentaire de l'unité en hauteur (10), la valeur du signal de mesure (L20) indiquant un faisceau lumineux entre la première paire de capteurs photoélectriques (20, 20') à fournir à la commande de base de l'unité en hauteur (10) de sorte que la commande de base de l'unité en hauteur (10) considère qu'un faisceau lumineux entre la première paire de capteurs photoélectriques (20, 20') a été rompu.

11. Appareil de lavage et/ou de séchage pour un véhicule (1), comprenant
au moins un appareil de lavage et/ou de séchage (4) d'un véhicule (1) pourvu d'au moins une unité en hauteur (10) ;
au moins élément de mesure (11, 20, 20', 21, 21') pour mesurer au moins un signal de mesure (MS, L20, L21) indiquant une position de l'unité en hauteur (10) par rapport au véhicule (1) ;
au moins une unité de commande (12) pour commander la position de l'unité en hauteur (10) par rapport au véhicule (1), l'unité de commande (12) comprenant une commande de base de l'unité en hauteur (10) qui est configurée pour commander la position de l'unité en hauteur (10) par rapport au véhicule (1) sur la base du signal de mesure (MS, L20, L21) indiquant la position de l'unité en hauteur (10) par rapport au véhicule (1) ;
des moyens pour déterminer un profil virtuel longitudinal (15) du véhicule (1) ; et
au moins une unité de commande (14) comprenant une commande supplémentaire en se basant sur le profil virtuel longitudinal (15) du véhicule (1), moyennant quoi la position de l'unité en hauteur (10) par rapport au véhicule (1) est agencée pour être commandée par une commande en continu de la position de l'unité en hauteur (10) par rapport au véhicule (1) par la commande de base de l'unité en hauteur (10) et en agissant sur la commande de base de l'unité en hauteur (10), le cas échéant, par une commande supplémentaire de l'unité en hauteur (10) en se basant sur le profil virtuel longitudinal (15) du véhicule (1) ;
**caractérisé en ce que**
la commande de base de l'unité en hauteur (10) est agencée pour commander la position de l'unité en hauteur (10) par rapport au véhicule (1) sur la base d'au moins un signal de mesure (MS, L20, L21) indiquant la distance entre l'unité en hauteur (10) et le véhicule (1) et **en ce que** la commande supplémentaire de l'unité en hauteur (10) est agencée pour agir sur la commande de base de l'unité en hauteur (10),
la commande supplémentaire de l'unité en hauteur (10) est agencée pour modifier la valeur dudit au moins un signal de mesure (MS, L20) indiquant la distance entre l'unité en hauteur (10) et le véhicule (1).

12. Appareil de lavage et/ou de séchage pour un véhicule (1) selon la revendication 11, **caractérisé en ce que** la commande supplémentaire de l'unité en hauteur (10) est agencée pour modifier la valeur du signal de mesure (MS, L20) indiquant la distance entre l'unité en hauteur (10) et le véhicule (1) de sorte que la commande de base de l'unité en hauteur (10) considère que l'unité en hauteur (10) est plus proche du véhicule (1) qu'elle ne l'est réellement.

13. Appareil de lavage et/ou de séchage pour un véhicule (1) selon la revendication 11 ou 12, **caractérisé en ce que** le profil virtuel (15) est agencé pour former une zone interdite où la commande de base n'est pas autorisée à commander l'unité en hauteur (10).

14. Appareil de lavage et/ou de séchage pour un véhicule (1) selon la revendication 13, **caractérisé en ce que** l'appareil de lavage et/ou de séchage du véhicule (1) comporte au moins un rideau lumineux (16) pour capturer un profil général du véhicule (1) et au moins un appareil (17) qui détermine le profil virtuel (15), pour déterminer le point le plus haut du profil général dans chaque position longitudinale du véhicule (1) et pour déterminer la portion entière en-dessous de celui-ci comme une zone interdite.

15. Appareil de lavage et/ou de séchage pour un véhicule (1) selon l'une quelconque des revendications 11 à 14, **caractérisé en ce que** l'unité en hauteur (10) comprend une brosse de lavage (6) que fait tourner un moteur rotatif actionné électriquement (8) et **en ce que** l'élément de mesure (11) est configuré pour mesurer le courant (I) ou la puissance (P) utilisé(e) par le moteur rotatif (8).

16. Appareil de lavage et/ou de séchage pour un véhicule (1) selon la revendication 15, **caractérisé en ce que**, lorsque la valeur du courant (I) ou de la puissance (P) mesuré (e) dépasse une valeur seuil prédéterminée, la commande de base de l'unité en hauteur (10) est agencée pour commander l'unité en hauteur pour l'éloigner davantage du véhicule (1) et **en ce que** lorsque la valeur mesurée du courant (I) ou de la puissance (P) reste en-dessous de la valeur seuil prédéterminée, la commande de base de l'unité en hauteur (10) est agencée pour commander l'unité en hauteur (10) pour la rapprocher du véhicule (1).

17. Appareil de lavage et/ou de séchage pour un véhicule (1) selon la revendication 15 ou 16 **caractérisé en ce que** la commande supplémentaire de l'unité en hauteur (10) est configurée pour augmenter, le cas échéant, la valeur mesurée du courant (I) ou de la puissance (P) utilisé(e) par le moteur rotatif (8) sur la base du profil virtuel (15) du véhicule (1).

18. Appareil de lavage et/ou de séchage pour un véhicule (1) selon l'une quelconque des revendications 11 à 14, **caractérisé en ce que** l'unité en hauteur (10) comprend au moins une buse de lavage (18) ou au moins une buse de séchage et **en ce que** l'unité en hauteur (10) comprend en outre au moins une première paire de capteurs photoélectriques (20, 20') et au moins une seconde paire de capteurs photoélectriques (21, 21') agencés aux extrémités opposées de l'unité en hauteur (10), la première paire de capteurs photoélectriques (20, 20') étant placée plus haut dans la direction de la hauteur (H) du véhicule (1) que la seconde paire de capteurs photoélectriques (21, 21'), et **en ce que** la position de l'unité en hauteur par rapport au véhicule (1) est agencée pour être déterminée sur la base de la présence et/ou l'absence d'un faisceau lumineux entre la première paire de capteurs photoélectriques (20, 20') et/ou un faisceau lumineux entre la seconde paire de capteurs photoélectriques (21, 21').

19. Appareil de lavage et/ou de séchage pour un véhicule (1) selon la revendication 18, **caractérisé en ce que** la commande de base de l'unité en hauteur (10) est agencée pour commander la position de l'unité en hauteur (10) par rapport au véhicule (1) de sorte que lorsqu'un faisceau lumineux entre la première paire de capteurs photoélectriques (20, 20') est rompu, l'unité en hauteur (10) s'éloigne davantage du véhicule (1), et lorsqu'un faisceau lumineux entre la seconde paire de capteurs photoélectriques (21, 21') est établi, l'unité en hauteur (10) se rapproche du véhicule (1).

20. Appareil de lavage et/ou de séchage pour un véhicule (1) selon la revendication 18 ou 19, **caractérisé en ce que** la commande supplémentaire de l'unité en hauteur (10) est configurée pour modifier, sur la base du profil virtuel (15), le cas échéant, la valeur du signal de mesure (L20) indiquant un faisceau lumineux entre la première paire de capteurs photoélectriques (20, 20') à fournir à la commande de base de l'unité en hauteur (10) de sorte que la commande de base de l'unité en hauteur (10) considère que le faisceau lumineux entre la première paire de capteurs photoélectriques (20, 20') a été rompu.
